# EUROPÄISCHE PATENTANMELDUNG

(11) **EP 4 170 883 A1**
(43) Veröffentlichungstag der Anmeldung: **26.04.2023**
(21) Anmeldenummer: 21203946.5
(22) Anmeldetag: 21.10.2021
(51) Int. Cl.: H02M 3/00, H02M 7/48, H02M 1/00, H04B 3/14

(54) **VERFAHREN ZUR REGELUNG EINES RESONANZWANDLERS**

(71) Anmelder: Siemens Aktiengesellschaft, 80333 München (DE)
(72) Erfinder: Demoulin, Harald, 2340 Mödling (AT)
(74) Vertreter: Siemens Patent Attorneys

(57) **Zusammenfassung**

Die Erfindung betrifft ein Verfahren zur Regelung eines Resonanzwandler (RW) mit einer galvanischen Trennung, welcher primärseitig zumindest zwei taktende Schaltelemente (S1, S2) aufweist, welche jeweils mittels eines Steuersignals (AS1, AS2) angesteuert werden. Das jeweilige Steuersignal (AS1, AS2) zur Ansteuerung der zumindest zwei Schaltelemente (S1, S2) wird aus einer Stellgröße (p) einer Reglereinheit (RE) zur Regelung der Ausgangsspannung (Ua) des Resonanzwandlers (RW) abgeleitet. Für die Regelung wird zuerst ein jeweils aktuelle Stellgröße (p) anhand eines Vergleichs der jeweils aktuellen Ausgangsspannung (Ua) mit einem vorgegebenen Sollwert (Ua,soll) ermittelt (101) und einem Entzerrermodul (EN) zugeführt (102). Im Entzerrermodul (EN) wird durch einen Vergleich der jeweils aktuellen Stellgröße (p) mit einem vorgegebenen Grenzwert eine anzuwendende Regelmethode aus zumindest zwei vorgegebenen Regelmethoden bestimmt (103), wobei eine erste Regelmethode angewendet wird, wenn die jeweils aktuelle Stellgröße (p) größer als der vorgegebene Grenzwert ist, und eine zweite Regelmethode angewendet wird, wenn die jeweils aktuelle Stellgröße (p) kleiner als der vorgegebene Grenzwert ist. Dann wird die jeweils aktuelle Stellgröße (p) an ein Übertragungsverhalten des Resonanzwandlers (RW) als Regelstrecke bei der jeweils ermittelten Regelmethode angepasst (104). Dann wird aus der angepassten Stellgröße (p1) das jeweilige Steuersignal (AS1, AS2) für die zumindest zwei taktenden Schaltelemente (S1, S2) entsprechend der jeweils ermittelten Regelmethode abgeleitet (105) und die zumindest zwei Schaltelemente (S1, S2) mit dem jeweiligen abgeleiteten Steuersignal (AS1, AS2) angesteuert (106). Die Regelschritte werden durchlaufen, bis die Ausgangsspannung (Ua) des Resonanzwandlers (RW) auf den vorgegebenen Sollwert (Ua, soll) annähernd konstant eingestellt wurde.

## Beschreibung

### Technisches Gebiet

Die gegenständliche Erfindung betrifft allgemein das Gebiet der Elektrotechnik, insbesondere den Bereich der Leistungselektronik und leistungselektronischer Schaltungen zur Stromversorgung. Im Speziellen bezieht sich die vorliegende Erfindung auf ein Verfahren zur Regelung eines Resonanzwandler mit einer galvanischen Trennung, insbesondere einem Transformator. Der Resonanzwandler weist primärseitig zumindest zwei taktende Schaltelemente auf, welche jeweils mittels eines Steuersignals angesteuert werden. Das jeweilige Steuersignal zur Ansteuerung der zumindest zwei taktenden Schaltelemente wird aus einer Stellgröße einer Reglereinheit zur Regelung der Ausgangsspannung des Resonanzwandlers abgeleitet.

### Stand der Technik

In modernen Stromversorgungen für elektrische Geräte werden heutzutage immer häufiger Resonanzwandler, welche im Englischen auch als "resonant Converter" bezeichnet werden, eingesetzt. Ein Resonanzwandler stellt eine spezielle schaltungstechnische Form eines Gleichspannungswandlers dar. Dabei wandelt ein Resonanzwandler eine eingangsseitige Gleichspannung (z.B. gleichgerichtete Wechselspannung, etc.) in eine ein- oder mehrphasige Wechselspannung um. Die Wechselspannung kann durch eine Gleichrichtereinheit ausgangsseitig wieder gleichgerichtet werden. Ohne ausgangsseitige Gleichrichtung wird der Resonanzwandler auch als Wechselrichter oder Inverter bezeichnet. Für einen optimalen Betrieb wird der Resonanzwandler üblicherweise mit annähernd konstanter Last betrieben.

Zur Energieübertragung arbeitet der Resonanzwandler mit einem Schwingkreis bzw. Resonanzkreis, welcher aus zumindest einer Resonanzinduktivität und einer Resonanzkapazität aufgebaut ist. Je nach Schaltungsaufbau kann der Resonanzkreis primär- oder sekundärseitig angeordnet und als Serien- oder Parallelschwingkreis gestaltet sein. Üblicherweise wird der Resonanzkreis von der leistungsübertragende Strecke mit der galvanischen Trennung bzw. dem Transformator zumindest gemeinsam mit der Resonanzkapazität gebildet, wobei als Resonanzinduktivität z.B. die Streuinduktivität des Transformators allein oder die Streuinduktivität des Transformators gemeinsam mit zumindest einer weiteren Induktivität verwendet werden kann. Je nach Anwendung können Resonanzwandler z.B. als so genannte LLC-(=LCL)- oder LCC-Konverter gebildet werden.

Resonanzwandler weisen aufgrund ihrer frequenzabhängigen Komponenten (z.B. Kondensatoren, Spulen, Transformatoren, etc.) ein frequenzabhängiges Spannungsübersetzungsverhältnis zwischen Ausgangsspannung und Eingangsspannung auf. Dadurch kann durch Veränderung der Schaltfrequenz ein Übersetzungsverhältnis eingestellt werden, welches einen Wert größer, kleiner oder gleich 1 aufweisen kann. Durch beispielsweise entsprechende Wahl der Windungszahlen des im Resonanzwandler eingesetzten Transformators kann dieses Übersetzungsverhältnis weiter angepasst werden. Dieses Übersetzungsverhältnis ist jedoch bis auf eine spezielle Schaltfrequenz lastabhängig und nicht linear. Da Resonanzwandler in der Regel aus zwei oder mehreren frequenzbestimmenden Komponenten (z.B. Kondensatoren, Spulen, Transformatoren, etc.) bestehen, gibt es oft mehrere Resonanzfrequenzen, wobei meist nur bei einer bestimmten Resonanzfrequenz ein lastunabhängiges Übersetzungsverhältnis auftritt. Nur bei Betrieb mit exakt dieser Resonanzfrequenz als Schaltfrequenz für die primärseitigen Schaltelemente bzw. bei Betrieb im so genannten Resonanzpunkt weist der Resonanzwandler nahezu keine bzw. sehr geringe Schaltverluste und einen sehr hohen Wirkungsgrad auf. Der Resonanzwandler arbeitet dann am effizientesten und weist ein fast konstantes Übersetzungsverhältnis zwischen Eingangsspannung und Ausgangsspannung auf, welches sich nur am Windungszahlverhältnis zwischen Primär- und Sekundärwicklungen des verwendeten Transformators orientiert. Während des Betriebs mit der Resonanzfrequenz kann auch eine sehr hohe Überlast übertragen werden, welche in erster Linie nur durch eine Kühlung und durch für die primärseitigen Schaltelemente verwendeten Leistungshalbleiterelemente begrenzt wird.

Zur Regelung der Ausgangsspannung auf einen vorgegebenen Sollwert ist beispielsweise eine Reglereinheit (z.B. PI-Regler) vorgesehen, welche eine aktuelle Ausgangsspannung mit dem vorgegebenen Sollwert vergleicht und daraus eine Stellgröße erzeugt. Aus der Stellgröße der Reglereinheit werden zur Regelung der Ausgangsspannung Steuersignale für die taktenden Schaltelemente auf der Primärseite des Resonanzwandlers abgeleitet. Über die jeweiligen Steuersignale werden die taktenden Schaltelemente üblicherweise jeweils mit einer Schaltfrequenz vorgegeben, welche beispielsweise durch Bijektion bzw. eindeutig umkehrbare Abbildung aus der Stellgröße abgeleitet wird. Üblicherweise werden bei Resonanzwandlern zur Regelung der Ausgangsspannung die primärseitigen Schaltelemente mit fixem, meist einem maximal sinnvoll möglichen Tastverhältnis und variabler Frequenz bzw. Schaltfrequenz angesteuert. Das Tastverhältnis (d.h. ein Verhältnis einer Einschaltdauer zur einer Periodendauer eines Schaltzyklus bestehend aus einem Einschalten und einem Ausschalten des jeweiligen Schaltelements) ist beispielsweise - bis auf vernachlässigbare Pausen bzw. so genannte Totzeiten zur Verhinderung von Kurzschlüssen bei z.B. Brückenschaltungen der primärseitigen Schaltelemente - nahezu 50% je Schaltelemente z.B. einer Halbbrückenschaltung. Die Frequenz, mit welcher die Schaltelemente jeweils schalten, wird dann für die Regelung der Ausgangsspannung verändert.

Durch das Takten der primärseitigen Schaltelemente fließt ein Resonanzstrom durch den Resonanzkreis und führt zur Energieübertragung. Dabei entspricht eine Pulslänge des Steuersignals (z.B. Rechteck-Signal) des jeweiligen Schaltelements im Wesentlichen einer halben Schwingungsdauer des Resonanzkreises, um ein Einschalten und Ausschalten der zumindest zwei primärseitigen Schaltelemente in einem Schwingungsnulldurchgang des Stroms oder der Spannung - d.h. um so genanntes Zero Voltage Switching (kurz: ZVS) oder so genanntes Zero Current Switching (kurz: ZCS) - zu ermöglichen. Dadurch werden während der Schaltvorgänge die Verlustleistung minimiert sowie elektromagnetische Störungen geringgehalten. Es kann z.B. zwischen Resonanzwandlern mit Zero Voltage Switching und Resonanzwandler mit Zero Current Switching unterschieden werden, wobei meist beides zusammenfällt. Das bedeutet, dass der Bereich der sinnvoll nutzbaren Schaltfrequenzen, mit welchen jeweils die primärseitigen Schaltelemente betreibbar sind, durch den Resonanzkreis - gebildet aus Resonanzinduktivität und Resonanzkapazität - mitbestimmt wird.

Während des Betriebs eines Resonanzwandlers kann es jedoch notwendig sein, zumindest kurzfristig die Ausgangsspannung mittels Regelung - d.h. mittels Veränderung der Schaltfrequenz der primärseitigen Schaltelemente - anzuheben oder abzusenken. Allerdings weisen Resonanzwandler eine Übertragungsfunktion auf, die im Wesentlichen stark von einem Verhältnis zwischen der Resonanzinduktivität und einer Hauptinduktivität des Transformators abhängig ist. Das bedeutet, bei Notwendigkeit die Ausgangsspannung zu senken - z.B. entweder zu Regelzwecken oder bei Überlast zum Zweck der Strombegrenzung - wird z.B. bei einer relativ zur Hauptinduktivität relativ kleinen Resonanzinduktivität ein für die Absenkung der Ausgangsspannung erforderliche Schaltfrequenz relativ hoch liegen. Dabei kann die erforderliche Frequenz derart hoch sein, dass die primärseitigen Schaltelemente aufgrund der sehr hohen, dadurch entstehenden Schaltverluste Schaden nehmen.

Ein kurzfristige Absenkung bzw. Anhebung der Ausgangsspannung während des Betriebs eines Resonanzwandlers kann beispielsweise notwendig sein, um eine so genannte Brummspannung auszuregeln. Diese ergibt sich z.B., wenn als Eingangsspannung eine gleichgerichtete Wechselspannung verwendet wird. Als Brummspannung wird üblicherweise ein Restwelligkeit bzw. ein noch verbleibender Wechselspannungsanteil einer Spannung nach dem Gleichrichten durch einen Gleichrichter, dem Glätten durch einen Glättungskondensator und/oder durch Herabregeln mittels eines Spannungsreglers auf ein niedrigeres Niveau bezeichnet. Wird nun beispielsweise zusätzlich zur Anforderung, eine Brummspannung auszuregeln, an den Resonanzwandler die Anforderung gestellt, eine hohe - wenn auch thermisch in der Zeit begrenzte - Überlastfähigkeit aufzuweisen, welche auch bei anderen Betriebszuständen als dem Betrieb mit der Resonanzfrequenz möglich sein soll, so kann es sein, dass keine passende Dimensionierung für den Resonanzwandler gefunden wird, welche diese Anforderungen abdecken kann.

Weiterhin kann es insbesondere bei für höhere Leistungen dimensionierten Resonanzwandlern bzw. bei steigender Last am Ausgang des Resonanzwandlers zu Einschränkungen bei der Anhebung bzw. bei Aufwärtswandlung der Ausgangsspannung mittels Absenkung der Schaltfrequenz der primärseitigen Schaltelemente kommen. Das bedeutet, dass sich im schlimmsten Fall die Ausgangsspannung des Resonanzwandlers trotz Reduktion der Schaltfrequenz (unter die Resonanzfrequenz) nicht mehr über einen Wert der Ausgangsspannung anheben lässt, welcher sich beim Takten der primärseitigen Schaltelemente mit der Resonanzfrequenz einstellt. Ein Absenken der Schaltfrequenz bzw. ein Anheben der Ausgangsspannung kann - neben dem Ausregeln einer Brummspannung - beispielsweise auch notwendig sein, um zumindest kurzfristig einen vorgebbaren Überstrom (z.B. 2-fachen, 3-fachen oder 4-fachen Nennstrom des Resonanzwandlers) am Ausgang des Resonanzwandlers zu erhalten und gleichzeitig die vorgegebene Ausgangsspannung (z.B. Nennausgangsspannung) zu halten. Ein derartiger Überstrom kann z.B. zum sicheren Auslösen einer ausgangsseitig angeordneten Sicherung gefordert sein.

Weiterhin kann es bei einem Überlastfall (z.B. Überlast, Kurzschluss, etc.) notwendig sein, die Ausgangsspannung des Resonanzwandlers beispielsweise derart abzusenken, dass eine geforderte Strom-Spannungs-Kennlinie für einen Strombegrenzung bzw. bis zum Kurzschluss gewährleistet wird. Um eine derartige, notwendige Absenkung der Ausgangsspannung des Resonanzwandlers zu erreichen, müssen beispielsweise die primärseitigen Schaltelemente mit einer höheren Schaltfrequenz als der Resonanzfrequenz getaktet werden. Der Resonanzwandler weicht vom idealen Betrieb mit der Resonanzfrequenz ab und die Schaltelemente werden z.B. "hart" ein- und ausgeschaltet - d.h. nicht mehr im Spannungs- und/oder Stromnulldurchgang. Es entstehen dadurch höhere Verluste - trotz einer sinkenden Ausgangsleistung, insbesondere bei einer im Verhältnis zur Hauptinduktivität des Resonanzwandlers, kleinen Resonanzinduktivität, wobei die Hauptinduktivität des Resonanzwandlers üblicherweise durch eine Primärwicklung des Transformators und die Permeabilität des Transformatorkerns des Resonanzwandlers definiert ist. Im schlimmsten Fall können die primärseitigen Schaltelemente durch die Verlust aufgrund der gesteigerten Schaltfrequenz beschädigt oder zerstört werden. Weiterhin entstehen durch die Steigerung der Schaltfrequenz beispielsweise auch erhöhte Verluste am Transformator sowie an einer sekundärseitig angeordneten Gleichrichtereinheit (z.B. Dioden, Synchron-Gleichrichter).

Um massiv steigende Verluste im Resonanzwandler bei Absenkung der Ausgangsspannung durch Anheben der Schaltfrequenz über die Resonanzfrequenz hinaus zu verhindern, besteht beispielsweise die Möglichkeit, dem Resonanzwandler eingangsseitig eine zusätzlich Wandler-Stufe, insbesondere einen Tiefsetzsteller, vorzuschalten. Durch Vorschalten der zusätzlichen Wandler-Stufe bzw. eines Tiefsetzsteller, dessen Ausgangsspannung z.B. mittels Tastverhältnismodulation geregelt wird, wird sichergestellt, dass der Resonanzwandler wieder mit einem fixen Übersetzungsverhältnis bzw. möglichst im Resonanzbetrieb arbeiten kann. Durch vorgeschaltete Wandler-Stufe kann die Eingangsspannung des Resonanzwandler, welche im Prinzip der Ausgangsspannung der vorgeschalteten Wandler-Stufe entspricht, entsprechend zur abgesenkten Ausgangsspannung des Resonanzwandlers eingestellt werden. Der Resonanzwandler, insbesondere die Resonanzinduktivität, muss dann nicht mehr für eine Anhebung der Ausgangsspannung dimensioniert werden, wodurch z.B. ein vorgebbarer Überstrom zumindest kurzfristig am Ausgangs des Resonanzwandlers ermöglicht wird. D.h., es kann z.B. eine im Verhältnis zur Hauptinduktivität des Resonanzwandlers kleine Resonanzinduktivität gewählt werden.

Allerdings ist das Vorschalten der zusätzlichen Wandler-Stufe mit erhöhtem Platzbedarf und Kosten verbunden. Weiterhin ist diese zusätzliche Wandler-Stufe nicht nur z.B. im Überlastfall im Betrieb, sondern auch dann, wenn der Resonanzwandler im Normalbetrieb mit der Resonanzfrequenz bzw. bei Nennlast betrieben wird. Dadurch entsteht während des Normalbetriebs des Resonanzwandlers eine unnötige Verlustleistung durch die vorgeschaltete Wandler-Stufe. Zum Schutz der primärseitigen Schaltelemente des Resonanzwandlers vor Beschädigungen, insbesondere im Überlast- und/oder Kurzschlussfall, ist es weiterhin notwendig, dass die Eingangsstufe bzw. der Tiefsetzsteller die Eingangsspannung des Resonanzwandlers relativ rasch anpassen kann. Ist die Eingangsstufe beispielsweise für eine derartige Anpassung zu langsam (z.B. durch einen Zwischenkreiskondensator mit großer Kapazität), so sind gegebenenfalls weitere Schutzvorrichtung zum Schutz des Resonanzwandlers, insbesondere der Schaltelemente notwendig.

### Darstellung der Erfindung

Der Erfindung liegt daher die Aufgabe zugrunde, ein Regelverfahren für einen Resonanzwandler anzugeben, durch welches auf einfache Weise und mit geringem Aufwand ein Regelverhalten des Resonanzwandlers verbessert und negative Auswirkungen einer im Vergleich zur Hauptinduktivität kleinen Resonanzinduktivität erheblich reduziert werden.

Diese Aufgabe wird durch ein Verfahren zur Regelung eines Resonanzwandlers gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Regelverfahren für einen Resonanzwandler der eingangs erwähnten Art, bei welchem folgende Schritte so lange durchlaufen werden, bis die Ausgangsspannung des Resonanzwandlers auf einem vorgegebenen Sollwert annähernd konstant gehalten wird:
- Ermitteln einer jeweils aktuellen Stellgröße mittels Vergleich einer jeweils aktuellen Ausgangsspannung mit dem vorgegebenen Sollwert;
- Zuführen der jeweils aktuellen Stellgröße einem Entzerrermodul;
- Ermitteln einer aktuell anzuwendenden Regelmethode aus zumindest zwei vorgegebenen Regelmethoden zur Regelung der Ausgangsspannung des Resonanzwandlers durch Vergleich der jeweils aktuellen Stellgröße mit einem vorgegebenen Grenzwert, wobei eine erste Regelmethode angewendet wird, wenn die jeweils aktuelle Stellgröße größer als der vorgegebene Grenzwert ist, und wobei eine zweite Regelmethode angewendet wird, wenn die jeweils aktuelle Stellgröße kleiner als der vorgegebene Grenzwert ist;
- Anpassen der jeweils aktuellen Stellgröße an ein Übertragungsverhalten des Resonanzwandlers als Regelstrecke bei der jeweils ermittelten Regelmethode;
- Ableiten des jeweiligen Steuersignals für die zumindest zwei primärseitigen, taktenden Schaltelemente des Resonanzwandlers aus der jeweils angepassten Stellgröße entsprechend der jeweils ermittelten Regelmethode; und
- Ansteuern der zumindest zwei primärseitigen, taktenden Schaltelemente mit dem jeweiligen abgeleiteten Steuersignal.

Der Hauptaspekt der erfindungsmäßig vorgeschlagenen Lösung besteht darin, dass es durch das Regelungsverfahren möglich wird, eine Dimensionierung für einen Resonanzwandler zu finden, welche einen relativ hohen Überstrom am Ausgang des Resonanzwandlers mittels Aufwärtswandlung (d.h. die Ausgangsspannung ist höher als die Eingangsspannung) erlaubt und eine stabile Regelung der Ausgangsspannung erlaubt. Weiterhin kann durch das erfindungsgemäße Regelungsverfahren eine sichere Strombegrenzung im Überlast- und/oder Kurzschlussfall sichergestellt werden und es ist möglich, z.B. am Eingang des Resonanzwandlers einen Energiespeicher für einen lückenlosen Betrieb (z.B. Kondensator, welcher bei Netzausfall z.B. 20ms Energie bereitstellen kann) zu schalten, ohne die primärseitigen Schaltelemente des Resonanzwandlers vor allem beim Kurzschluss durch hohen Spitzenströme zu gefährden oder zu schädigen.

Durch Einsatz einer Kombination von zwei unterschiedlichen Regelmethoden und einer Anpassung der aktuellen Stellgröße an das Übertragungsverhalten des Resonanzwandlers für die jeweils aktuell angewendeten Regelmethode in einem in den Regelkreis eingefügten Entzerrermodul kann eine Regelung des Resonanzwandlers sowohl beim Aufwärtswandeln als auch beim Abwärtswandeln bzw. Absenken der Ausgangsspannung erheblich verbessert werden. Die negativen Auswirkungen einer im Vergleich zur Hauptinduktivität des Resonanzwandlers kleinen Resonanzinduktivität werden außerdem erheblich reduziert, sodass beispielsweise die Resonanzinduktivität im Verhältnis zur Hauptinduktivität klein dimensioniert werden kann. D.h., dass eine neben der Streuinduktivität eingesetzte Linearisierungsinduktivität beispielsweise auf ein Minimum reduziert werden kann oder gänzlich entfallen kann.

Unter Regelmethode im Zusammenhang mit dem erfindungsgemäßen Verfahren wird ein Vorgang verstanden, bei welchem fortlaufend eine variable Größe, die Regelgröße (= Ausgangsgröße der Regelstrecke bzw. Ausgangsspannung oder Ausgangsstrom des Resonanzwandlers) erfasst, mit einem vorgegebenen Sollwert verglichen und im Sinne einer Angleichung an den Sollwert durch Veränderung eines oder mehrerer Beeinflussungsparameter beeinflusst wird. Die jeweilige Regelmethode gibt dabei vor, welchen Beeinflussungsparametern (z.B. Frequenz, Periodendauer, Tastverhältnis, Einschalt-/Ausschaltdauer, etc. der taktenden Schaltelemente des Resonanzwandlers) die Stellgröße direkt oder indirekt proportional ist bzw. durch welche Beeinflussungsparameter die Regelgröße (Ausgangsspannung des Resonanzwandlers) über die Regelstrecke (= Resonanzwandler) beeinflusst wird.

Das Übertragungsverhalten der Regelstrecke bzw. des Resonanzwandlers beschreibt dabei, wie sich eine Veränderung des jeweiligen Beeinflussungsparameters der jeweiligen Regelmethode auf die Regelgröße (= Ausgangsspannung) auswirken. Das Übertragungsverhalten kann mittels einer so genannten Übertragungsfunktion beschrieben werden, welche mathematisch die Beziehung zwischen einer Eingangsgröße, d.h. des Beeinflussungsparameters der jeweiligen Regelmethode, und der Ausgangsgröße, d.h. der Ausgangsspannung des Resonanzwandlers, beschreibt.

Es ist weiterhin vorteilhaft, wenn die jeweils aktuelle Stellgröße an das Übertragungsverhalten des Resonanzwandlers als Regelstrecke bei der jeweils ermittelten Regelmethode im Entzerrermodul mittels einer Entzerrerfunktion angepasst wird. Dabei wird für die jeweils ermittelte bzw. aktuell angewendete Regelmethode eine entsprechende bzw. passende Entzerrerfunktion verwendet. Dadurch kann das unterschiedliche Übertragungsverhalten des Resonanzwandlers in Abhängigkeit von der jeweils ermittelten bzw. aktuell angewendeten Regelmethode und die Auswirkungen des zugehörigen Beeinflussungsparameters auf einfache Weise berücksichtigt werden, da z.B. das Übertragungsverhalten des Resonanzwandlers bei Verwendung der ersten Regelmethode bzw. Veränderungen der entsprechend zugehörigen Beeinflussungsparameter andere Auswirkungen auf die Ausgangsspannung hervorrufen können als das Übertragungsverhalten des Resonanzwandlers bei Verwendung der zweiten Regelmethode und Veränderungen des entsprechend zugehörigen Beeinflussungsparameters. Diese Unterschiede können mittels entsprechender Entzerrerfunktion berücksichtigt werden. Die Regelstrecke bzw. der Resonanzwandler kann dadurch beispielsweise linearisiert werden, um ein weitgehend stabiles Regelverhalten zu erreichen.

Dabei ist es günstig, wenn als Entzerrerfunktion zum Anpassen der jeweils aktuellen Stellgröße eine Umkehrfunktion oder so genannte inverse Funktion einer Übertragungsfunktion des Resonanzwandlers als Regelstrecke bei der jeweils ermittelten bzw. aktuell angewendeten Regelmethode verwendet wird. Unter einer Umkehrfunktion oder inversen Funktion einer Funktion wird in der Mathematik üblicherweise eine Funktion verstanden, welche Variablen umgekehrt zuordnet als die ursprüngliche Funktion. Das bedeutet, es werden z.B. x-Werte und y-Werte der ursprünglichen Funktion vertauscht. Werden die Graphen einer Funktion und der zugehörigen Umkehrfunktion betrachtet, so ergibt sich die Umkehrfunktion einer Funktion durch Spiegelung der Funktion an der so genannten ersten Mediane. Die erste Mediane bezeichnet im kartesischen Koordinatensystem jene Gerade, welche sich mit der Geradengleichung f(x) = x darstellen lässt und welche durch den Ursprung verläuft und eine Steigung von 1 aufweist, welche z.B. in einem gleichskalierten kartesischen Koordinatensystem einer Steigung von 45° entspricht. Durch Verwendung der Umkehrfunktion als Entzerrerfunktion kann der Resonanzwandler bzw. sein Regelverhalten bei der jeweiligen Regelmethode sehr einfach linearisiert werden. Dadurch können beispielsweise größere Aufwärtswandlungen und Bereitstellung eines größeren, vorgebbaren Überstroms am Ausgang des Resonanzwandlers bei gleichbleibendem Übertragungsverhalten trotz reduzierter Resonanzinduktivität erzielt werden. Weiterhin kann eine eingesetzte Linearisierungsinduktivität beispielsweise auf ein Minimum reduziert werden oder gänzlich entfallen, wodurch ein verlustbehaftetes Bauteil weitgehend eingespart und der Wirkungsgrad des Resonanzwandlers verbessert wird.

Idealerweise wird für ein Ableiten der angepassten Stellgröße aus der jeweils aktuellen Stellgröße im Entzerrermodul zumindest eine Tabelle hinterlegt, in welcher die Entzerrerfunktion der jeweils ermittelten Regelmethode abgebildet wird. Die angepasste Stellgröße kann sehr rasch bestimmt werden, wenn zumindest eine Tabelle für die Anpassung der aktuellen Stellgröße an das Übertragungsverhalten des Resonanzwandlers bei der jeweils ermittelten bzw. aktuell angewendeten Regelmethode verwendet wird. Der Regelvorgang - d.h. ein Verändern der jeweiligen Beeinflussungsparameter der ermittelten bzw. aktuell angewendeten Regelmethode und damit der Ausgangsspannung - kann sehr schnell und z.B. ohne aufwendige und zeitintensive mathematische Berechnungen im Entzerrermodul durchgeführt werden.

Ein bevorzugte Ausführungsvariante der Erfindung sieht vor, dass die zumindest zwei Regelmethoden zur Regelung der Ausgangsspannung eine Frequenzmodulation bzw. Periodendauermodulation und eine Tastverhältnismodulation vorgegeben werden. Dabei wird zwischen den beiden vorgegebenen Regelmethoden - d.h. zwischen Frequenzmodulation und Tastverhältnismodulation gewechselt, wenn die jeweils aktuelle Stellgröße den vorgegeben Grenzwert erreicht bzw. über- oder unterschreitet. Bei der Frequenzmodulation bzw. Periodendauermodulation als Regelmethode stellt eine Frequenz des Steuersignals zur Ansteuerung der zumindest zwei taktenden Schaltelemente des Resonanzwandlers und damit eine Schaltfrequenz der zumindest zwei Schaltelemente den Beeinflussungsparameter dar, wobei die Periodendauer direkt oder indirekt über die (Schalt)-Frequenz beeinflusst werden kann. In Abhängigkeit der jeweils aktuellen bzw. angepassten Stellgröße wird die Frequenz bzw. Schaltfrequenz der zumindest zwei taktenden Schaltelemente verändert, um die Ausgangsspannung auf den vorgegeben Sollwert zu regeln. Bei der Tastverhältnismodulation als Regelmethode bildet ein Tastverhältnis (d.h. ein Verhältnis der Einschaltdauer eines Schaltelements im Verhältnis zur Gesamtdauer einer Schaltperiode des Schaltelements) des jeweiligen Steuersignals zur Ansteuerung der zumindest zwei Schaltelemente den Beeinflussungsparameter für die Regelung der Ausgangsspannung des Resonanzwandlers. In Abhängigkeit von der jeweils aktuellen bzw. angepassten Stellgröße wird dann das Tastverhältnis, mit welchem die zumindest zwei taktenden Schaltelemente geschalten werden, verändert, um die Ausgangsspannung auf den vorgegeben Sollwert zu regeln.

Weiterhin wird bei beiden Regelmethoden der Beeinflussungsparameter der jeweils anderen Regelmethode konstant gehalten oder höchstens linear mit der Stellgröße verändert. D.h., bei der Frequenzmodulation als Regelmethode wird zwar die Schaltfrequenz der zumindest zwei taktenden Schaltelemente des Resonanzwandlers geändert. Die zumindest zwei taktenden Schaltelemente takten allerdings mit einem fixen Tastverhältnis, welches idealerweise dem Tastverhältnis beim Grenzwert für eine Wechsel zwischen den vorgegebenen Regelmethoden entspricht. Bei der Tastverhältnismodulation als Regelmethode wird dann das Tastverhältnis verändert. Die zumindest zwei taktenden Schaltelemente werden allerdings mit einer fixen Frequenz bzw. Schaltfrequenz geschaltet. Die Frequenz entspricht dabei idealerweise jener Schaltfrequenz, mit welcher die zumindest zwei taktenden Schaltelement beim Grenzwert für den Wechsel zwischen den beiden Regelmethode geschaltet werden.

Weiterhin empfiehlt sich, wenn als Grenzwert für ein Ermitteln der jeweils anzuwendenden Regelmethode ein Stellgrößenwert vorgegeben wird, welcher einer vorgegebenen Grenzfrequenz einer Schaltfrequenz der zumindest zwei taktenden Schaltelemente entspricht. Die Grenzfrequenz kann dabei idealerweise so gewählt werden, dass die zumindest zwei Schaltelemente mit einer Schaltfrequenz takten, bei welcher beispielsweise die Schaltverluste noch relativ gering sind und die Schaltelemente vor Beschädigungen, etc. sicher sind.

Vorteilhafterweise wird als Grenzfrequenz eine Resonanzfrequenz des Resonanzwandlers vorgegeben, welche durch eine Resonanzinduktivität und eine Resonanzkapazität des Resonanzwandlers festgelegt wird. Bei der Resonanzfrequenz, welche durch die Resonanzinduktivität und die Resonanzkapazität definiert wird, arbeitet der Resonanzwandler üblicherweise im Normal- bzw. Resonanzbetrieb und weist die geringsten Schaltverluste auf. Alternativ kann allerdings auch eine Grenzfrequenz vorgegeben werden, welche bis zu 10% oder mehr oberhalb oder bis zu 10% oder mehr unterhalb dieser Resonanzfrequenz des Resonanzwandlers liegt.

Bei einer bevorzugten Fortbildung der Erfindung ist auch vorgesehen, dass von der Reglereinheit neben der Ausgangsspannung des Resonanzwandlers ein Ausgangsstrom des Resonanzwandler geregelt wird. Dadurch kann vor allem im Überlast- bzw. im Kurzschlussfall auf einfache und effiziente Weise eine Strombegrenzung durchgeführt werden. Weiterhin kann die Stromregelung auch dazu verwendet werden, um z.B. am Ausgang des Resonanzwandler einen vorgebbaren Überstrom (z.B. 2-fachen, 3-fachen oder 4-fachen Nennstrom) einstellen zu können.

Es ist weiterhin günstig, wenn das Entzerrermodul in eine Ansteuerung zum Ansteuern der zumindest zwei primärseitigen, taktenden Schaltelemente des Resonanzwandlers integriert wird. Für die Realisierung der Ansteuerung mit dem integrierten Entzerrermodul kann z.B. ein Mikrokontroller verwendet werden, wodurch z.B. die Funktionalität der Ansteuerung wie des Entzerrermodul auf einfache Weise auf der Softwareebene adaptiert und/oder erweitert werden können.

Weiterhin kann es vorteilhaft sein, wenn als Resonanzwandler ein so genannter LLC-Wandler eingesetzt wird. LLC-Wandler weisen eine Grundschaltung auf, welche idealerweise mit wenigen Bauteilen aufbaubar ist.

### Kurzbeschreibung der Zeichnung

Die Erfindung wird nachfolgend in beispielhafter Weise anhand der beigefügten Figuren erläutert. Es zeigen dabei:
Figur 1 in schematischer und beispielhafter Weise ein Schaltungsanordnung zur Durchführung des erfindungsgemäßen Verfahrens zur Regelung eines Resonanzwandlers
Figur 2 beispielhaft einen Ablauf des erfindungsgemäßen Verfahrens zur Regelung eines Resonanzwandlers

### Ausführung der Erfindung

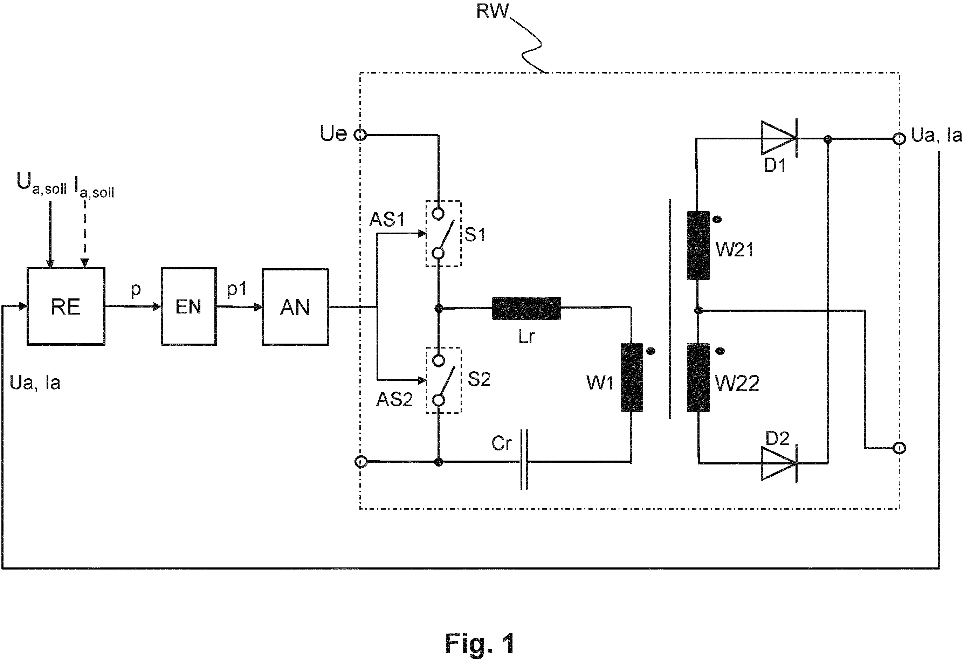

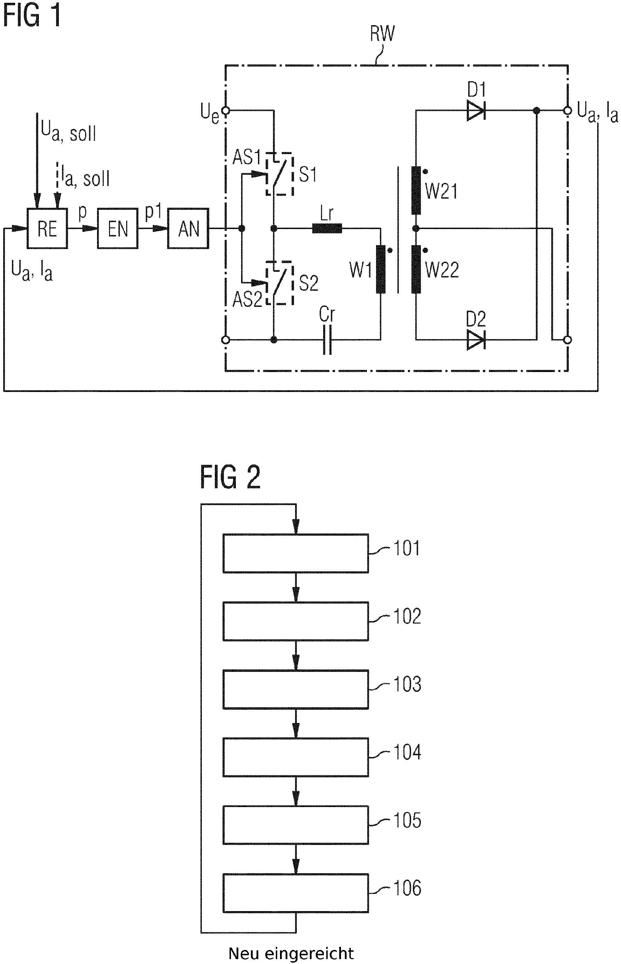

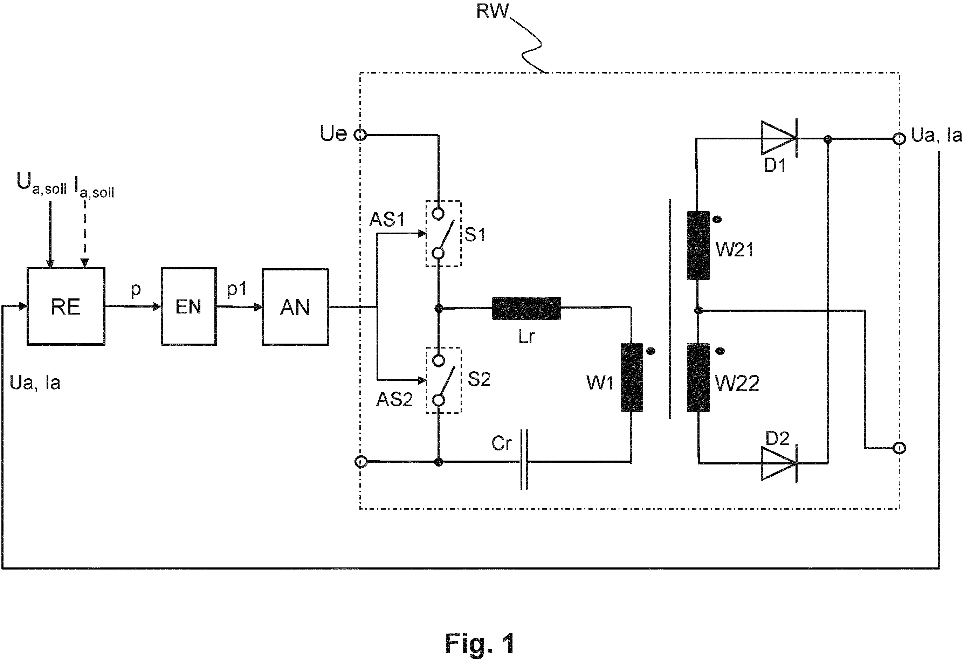

In Figur 1 ist beispielhaft und schematisch eine Schaltungsanordnung dargestellt, welche zur Durchführung des erfindungsgemäßen Verfahrens zur Regelung eines Resonanzwandlers RW eingerichtet ist. Diese Schaltungsanordnung weist einen Resonanzwandler RW mit einer galvanischen Trennung auf, welche den Resonanzwandler RW in eine Primärseite und in eine Sekundärseite trennt. Die galvanische Trennung ist dabei als Transformator mit einer Primärwicklung W1 auf der Primärseite und Sekundärwicklungen W21, W22 auf der Sekundärseite ausgestaltet. Dabei können die Sekundärwicklungen W21, W22 entweder als zwei getrennte Spulen W21, W22 oder als eine Spule mit Mittelanzapfung ausgeführt sein, wobei die Mittelanzapfung die Spule in eine erste Sekundärwicklung W21 und in eine zweite Sekundärwicklung W22 unterteilt.

Auf der Primärseite wird eine Eingangsspannung Ue (z.B. Gleichspannung, gleichgerichtete Wechselspannung) an den Resonanzwandler RW angelegt, welche auf der Sekundärseite vom Resonanzwandler RW in eine z.B. ein- oder mehrphasige Wechselspannung gewandelt wird. Die sekundäre Wechselspannung wird durch eine Gleichrichtereinheit, welche z.B. durch Dioden D1, D2 gebildet wird, in eine Ausgangsspannung Ua gleichgerichtet. Weiterhin ist auf einer Ausgangsseite des Resonanzwandlers RW ein Ausgangsstrom Ia verfügbar.

Der Resonanzkreis des Resonanzwandler RW, welcher beispielsweise als so genannter LLC-Resonanzwandler RW ausgestaltet ist, wird durch eine Resonanzkapazität Cr, eine Resonanzinduktivität Lr sowie die Primärwicklung W1 des Transformators gebildet. Im einfachsten Fall kann der Resonanzkreis beispielsweise aus einer Streuinduktivität des Transformators als Resonanzinduktivität Lr und zumindest einer Resonanzkapazität Cr gebildet werden. Häufig ist jedoch ein weitere Induktivität vorgesehen, welche gemeinsam mit der Streuinduktivität des Transformators die Resonanzinduktivität Lr bildet.

Weiterhin weist der Resonanzwandler RW primärseitig zumindest zwei Schaltelemente S1, S2 auf, welche beispielsweise als Halbbrückenschaltung angeordnet sind. Der Resonanzwandler RW kann allerdings auch eine Vollbrückenschaltung aufweisen, welche dann vier Schaltelemente S1, S2 aufweist. Als Schaltelemente S1, S2 können beispielsweise MOS-FETs, bipolare Transistoren oder IGBTs eingesetzt werden.

Die Schaltelemente S1, S2 des Resonanzwandlers RW werden abwechselnd mit einer kurzen Pause - einer so genannten Totzeit - geschaltet. Bei Verwendung einer Vollbrückenschaltung mit vier Schaltelementen S1, S2 werden jeweils zwei Schaltelemente S1, S2 gleichzeitig eingeschaltet bzw. ausgeschaltet, welche z.B. diagonal gegenüberliegend in der Brückenschaltung angeordnet sind. Für ein entsprechendes Takten wird den Schaltelementen S1, S2 jeweils über eine Ansteuerung AN eine Steuersignal AS1, AS2 vorgegeben. Durch das jeweilige Steuersignal AS1, AS2 wird das jeweilige Schaltelemente S1, S2 mit einer durch das jeweilige Steuersignal AS1, AS2 vorgegebenen Schaltfrequenz und mit einem durch das Steuersignal AS1, AS2 vorgegebenen Tastverhältnis ein- und ausgeschaltet. Bei einer wie in Figur 1 beispielhaft dargestellten Halbbrückenschaltung werden die Schaltelemente S1, S2 im Normal- bzw. Resonanzbetrieb des Resonanzwandlers RW beispielsweise alternierend mit einer kurzen Pause bzw. Totzeit ein- und üblicherweise in einem Strom- und/oder Spannungsnulldurchgang ausgeschaltet, wobei das jeweilige Steuersignal AS1, AS2 als Schaltfrequenz den Schaltelementen S1, S2 die Resonanzfrequenz des Resonanzwandlers RW, welche durch eine Resonanzinduktivität Lr und eine Resonanzkapazität Cr des Resonanzwandlers RW festgelegt wird, und als Tastverhältnis ein im wesentlichen fixes Tastverhältnis von ca. 1:1 vorgibt. D.h. jedes Schaltelement S1, S2 ist jeweils ca. 50% der Periodendauer ein und ca. 50% der Periodendauer ausgeschaltet. Es ist allerdings beispielsweise möglich, das Tastverhältnis oder die Frequenz geringfügig abzuändern, um z.B. Störaussendungen zu beeinflussen.

Zur Regelung der Ausgangsspannung Ua ist eine Reglereinheit RE vorgesehen. Als Regelgröße wird der Reglereinheit RE z.B. die jeweils aktuelle Ausgangsspannung Ua des Resonanzwandlers RW zugeführt, um diese z.B. auf einen vorgegebenen Sollwert Ua,soll einzustellen. Zusätzlich kann der Reglereinheit RE auch ein jeweils aktueller Ausgangsstrom Ia zugeführt werden, um diesen beispielsweise in bestimmten Fällen (z.B. Einstellen eines vorgebbaren Überstroms am Ausgang, Strombegrenzung bei Überlast) auf einen vorgegebenen Sollwert Ia,soll des Ausgangsstroms Ia einstellen zu können. Mittels Vergleich der Regelgröße bzw. der jeweils aktuellen Ausgangsspannung Ua mit dem vorgegebenen Sollwert Ua,soll ermittelt die Reglereinheit RE ein Regelabweichung und leitet daraus eine jeweils aktuelle Stellgröße p ab.

Als Reglereinheit RE wird beispielsweise ein so genannter Proportional-Integral-Regler bzw. PI-Regler eingesetzt. Üblicherweise ist die Reglereinheit RE auf der Sekundärseite des Resonanzwandlers RW angeordnet, wodurch die jeweils aktuelle Stellgröße p z.B. mittels einer nicht dargestellten Übertragungseinheit (z.B. Optokoppler, induktiver Übertrager, etc.) galvanisch getrennt auf die Primärseite des Resonanzwandlers RW übertragen werden muss. Es besteht aber auch die Möglichkeit, die Reglereinheit RE auf der der Primärseite des Resonanzwandlers RW anzuordnen.

Der Reglereinheit RE ist ein Entzerrermodul EN nachgeschaltet. Das Entzerrermodul kann beispielsweise als eigene Einheit realisiert sein. Idealerweise ist das Entzerrermodul EN allerdings in eine Ansteuerung AN integriert, von welcher das jeweilige Steuersignal AS1, AS2 zum Takten der primärseitigen Schaltelemente S1, S2 erzeugt wird. Die Ansteuerung AN und das Entzerrermodul EN bzw. die Ansteuerung AN mit dem integrierten Entzerrermodul EN werden beispielsweise mit Hilfe eines Mikrocontrollers realisiert.

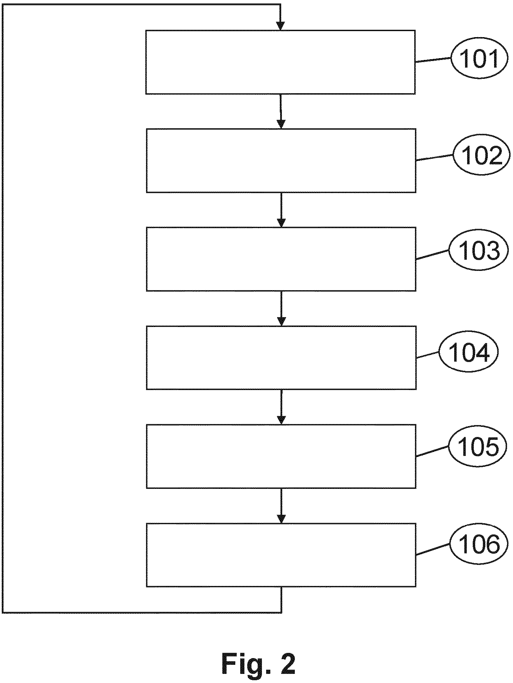

Figur 2 zeigt beispielhaft einen Ablauf des erfindungsgemäßen Verfahren zur Regelung eines Resonanzwandlers. Dabei wird in einem Ermittlungsschritt 101 von der Reglereinheit RE die aktuelle Ausgangsspannung Ua der Resonanzwandlers RW als Regelgröße mit einem vorgegebenen Sollwert Ua,soll verglichen. Mittels Vergleich der Regelgröße bzw. der jeweils aktuellen Ausgangsspannung Ua mit dem vorgegebenen Sollwert Ua,soll wird dann von der Reglereinheit RE ein Regelabweichung bestimmt und daraus die jeweils aktuelle Stellgröße p abgeleitet.

Zusätzlich kann der Reglereinheit RE im Ermittlungsschritt 101 auch ein jeweils aktueller Ausgangsstrom Ia als Regelgröße zugeführt werden, um diesen beispielsweise in bestimmten Fällen (z.B. Einstellen eines vorgebbaren Überstroms am Ausgang, Strombegrenzung bei Überlast) auf einen vorgegebenen Sollwert Ia,soll des Ausgangsstroms Ia einstellen zu können.

In einem Zuführschritt 102 wird die im Ermittlungsschritt 101 ermittelte, aktuelle Stellgröße p an das Entzerrermodul EN weitergeleitet. Bei Anordnung der Reglereinheit RE auf der Sekundärseite des Resonanzwandler RW wird die jeweils aktuelle Stellgröße dabei auf die Primärseite des Resonanzwandlers z.B. mittels eines Optokopplers, induktiven Übertrager, etc. übertragen.

In einem Auswertungsschritt 103 wird die jeweils aktuelle Stellgröße p mit einem vorgegebenen Grenzwert verglichen. Als Grenzwert wird dabei beispielsweise ein Stellgrößenwert vorgegeben, welcher durch eine vorgegebene Grenzfrequenz festgelegt wird. Die vorgegebene Grenzfrequenz ist beispielsweise eine Schaltfrequenz, bei welcher die beiden taktenden Schaltelemente S1, S2 des Resonanzwandlers ohne Schäden oder zu große Schaltverluste geschaltet werden. Idealerweise wird als Grenzwert ein Stellgrößenwert verwendet, welcher der Resonanzfrequenz des Resonanzwandlers RW bei Norm- bzw. Resonanzbetrieb entspricht. Diese Resonanzfrequenz wird durch die Resonanzinduktivität Lr und die Resonanzkapazität Cr des Resonanzwandlers RW festgelegt. Als Grenzfrequenz für den Grenzwert kann aber auch eine Frequenz gewählt werden, welche bis zu 10% oder mehr über oder welche bis zu 10% oder mehr unterhalb der Resonanzfrequenz des Resonanzwandlers RW liegt.

Aus dem Vergleich der jeweils aktuellen Stellgröße p mit dem vorgegebenen Grenzwert wird im Auswertungsschritt 103 aus zumindest zwei vorgegebenen Regelmethoden ein jeweils aktuell anzuwendende Regelmethode bestimmt. Dabei wird zur Regelung der Ausgangsspannung Ua bzw. des Ausgangsstroms Ia eine erste Regelmethode der vorgegebenen Regelmethoden verwendet, wenn die jeweils aktuelle Stellgröße größer als der vorgegebene Grenzwert ist. Ist die die jeweils aktuelle Stellgröße p kleiner als der vorgegebene Grenzwert, so wird zur Regelung der Ausgangsspannung Ua bzw. des Ausgangsstroms Ia eine zweite Regelmethode der vorgegebenen Regelmethoden angewendet. D.h., dass bei jeweiligem Erreichen des Grenzwerts durch die aktuelle Stellgröße ein Wechsel von der ersten auf die zweite Regelmethode bzw. von der zweiten auf die erste Regelmethode stattfindet. Als Regelmethoden zur Regelung der Ausgangsspannung Ua bzw. des Ausgangsstroms Ia des Resonanzwandlers RW können beispielsweise Frequenzmodulation und Tastverhältnismodulation vorgegeben werden.

In einer bevorzugten Ausführungsvariante des Verfahrens zur Regelung des Resonanzwandlers RW wird im Auswertungsschritt 103 beispielsweise als anzuwendende Regelmethode die Frequenzmodulation ermittelt, wenn die jeweils aktuelle Stellgröße p größer als der Grenzwert ist. Ist die jeweils aktuelle Stellgröße p kleiner als der Grenzwert, so wird als Regelmethode die Tastverhältnismodulation zum Regeln der Ausgangsspannung Ua bzw. des Ausgangsstroms Ia des Resonanzwandlers angewendet. Das bedeutet, solange die Stellgröße p oberhalb des Grenzwerts liegt, wird als Beeinflussungsparameter zur Regelung der Ausgangsspannung Ua bzw. des Ausgangsstroms Ia eine Frequenz bzw. eine Periodendauer des Steuersignals AS1, AS2 für die Schaltelemente S1, S2 und damit die Schaltfrequenz bzw. die Schaltperiode (d.h. Einschaltdauer und Ausschaltdauer) der Schaltelemente S1, S2 verwendet. Die Stellgröße p wird dabei z.B. als indirekt proportional zur Frequenz bzw. Schaltfrequenz oder direkt proportional zur Periodendauer bzw. Schaltperiode interpretiert. Weiterhin wird bei der Frequenzmodulation als angewendete Regelmethode das Tastverhältnis, mit welchem die Schaltelemente S1, S2 geschalten werden, konstant gehalten. Das konstante Tastverhältnis kann beispielsweise das Tastverhältnis des Grenzwerts sein, bei welchem auf die Pulsmodulation gewechselt wird. Wird der Grenzwert z.B. durch die Resonanzfrequenz des Resonanzwandlers RW festgelegt, so kann als Tastverhältnis während der Frequenzmodulation z.B. ein Tastverhältnis 1:1 vorgegeben werden.

Unterschreitet die aktuelle Stellgröße p den vorgegebenen Grenzwert, so wird auf die Tastverhältnismodulation als Regelmethode gewechselt, bei welcher das Tastverhältnis des jeweiligen Steuersignals AS1, AS2 für die Schaltelement S1, S2 verändert wird. D.h., es wird nun als Beeinflussungsparameter zur Regelung der Ausgangsspannung Ua bzw. des Ausgangsstroms Ia das Tastverhältnis des jeweiligen Steuersignals AS1, AS2 zur Ansteuerung der zumindest zwei Schaltelemente S1, S2 verwendet. Die Stellgröße p wird dann als direkt proportional zum Tastverhältnis oder gegebenenfalls zu einer Einschaltdauer der zumindest zwei taktenden Schaltelemente S1, S2 interpretiert. Bei der Tastverhältnismodulation als angewendete Regelmethode wird dann den beiden taktenden Schaltelemente S1, S2 des Resonanzwandlers RW eine fixe Frequenz bzw. Schaltfrequenz vorgegeben, welche beispielsweise der Grenzfrequenz entspricht, durch welche der Grenzwert für den Wechsel zwischen den beiden Regelmethoden definiert wird. Bei der Resonanzfrequenz als Grenzfrequenz takten während der Pulsmodulation die beiden Schaltelemente S1, S2 beispielsweise konstant mit der Resonanzfrequenz des Resonanzwandlers RW, wobei zur Regelung der Ausgangsspannung Ua bzw. des Ausgangsstroms Ia das Tastverhältnis verändert wird. Dabei kann es günstig sein, wenn beispielsweise unterhalb eines gewissen Tastverhältnisses die Periodendauer wieder angehoben wird bzw. die Schaltfrequenz gesenkt wird, um z.B. die Verlustleistung zu verringern.

Wird beispielsweise in einer alternativen Ausführungsvariante des Verfahrens zur Regelung des Resonanzwandlers RW die Stellgröße p als direkt proportional zur Frequenz des Steuersignals AS1, AS2 bzw. zur Schaltfrequenz der beiden Schaltelemente S1, S2 betrachtet, so ergibt sich eine Umkehr des Regelsinns. Das bedeutet, solange die aktuelle Stellgröße p über dem vorgegeben Grenzwert liegt, wird zur Regelung der Ausgangsspannung Ua bzw. des Ausgangsstroms Ia die Tastverhältnismodulation verwendet. Die Schaltfrequenz der beiden Schaltelemente S1, S2 wird dabei z.B. konstant auf der vorgegebenen Grenzfrequenz (z.B. Resonanzfrequenz) gehalten und das Tastverhältnis als Beeinflussungsparameter verändert. Erst wenn die aktuelle Stellgröße p den Grenzwert unterschreitet, erfolgt ein Wechsel auf die Frequenzmodulation bzw. Periodendauermodulation als Regelmethode. Dann wird die Frequenz bzw. Schaltfrequenz der beiden Schaltelemente S1, S2 als Beeinflussungsparameter zur Regelung der Ausgangsspannung Ua bzw. des Ausgangsstroms Ia genutzt und das Tastverhältnis auf einem Tastverhältnis konstant gehalten, welches z.B. dem Tastverhältnis beim Grenzwert (z.B. Tastverhältnis 1:1) entspricht.

Nach Ermittlung der aktuell anzuwendenden Regelmethode im Auswertungsschritt 103 wird in einem Anpassungsschritt 104 aus der jeweils aktuellen Stellgröße p in Anhängigkeit von der ermittelten Regelmethode eine angepasste Stellgröße p1 abgeleitet. Die angepasste Stellgröße p1 wird im Entzerrermodul EN an ein Übertragungsverhalten des Resonanzwandlers RW als Regelstrecke bei der jeweils ermittelten bzw. aktuell angewendeten Regelmethode angepasst. Dazu wird eine entsprechende Entzerrerfunktion für die jeweils im Auswertungsschritt 103 ermittelte Regelmethode verwendet. Als Entzerrerfunktion kommt dabei eine Umkehrfunktion einer Übertragungsfunktion des Resonanzwandlers RW als Regelstrecke bei der jeweils ermittelten Regelmethode zum Einsatz. Dabei wird z.B. bei der Frequenzmodulation die Umkehrfunktion einer Übertragungsfunktion eingesetzt, welche das Übertragungsverhalten des Resonanzwandlers RW bzw. eine Abhängigkeit der Ausgangsspannung Ua bzw. des Ausgangsstroms Ia vom Beeinflussungsparameter der Frequenzmodulation - d.h. von der Frequenz und/oder der Periodendauer des Steuersignals AS1, AS2 bzw. der Schaltfrequenz und/oder der Schaltperiode der Schaltelemente S1, S2 beschreibt. Bei der Pulsmodulation als ermittelte bzw. aktuelle angewendete Regelmethode wird z.B. als Entzerrerfunktion die Umkehrfunktion einer Übertragungsfunktion verwendet, welche das Übertragungsverhalten des Resonanzwandlers RW bzw. eine Abhängigkeit der Ausgangsspannung Ua bzw. des Ausgangsstroms Ia vom Beeinflussungsparameter der Tastverhältnismodulation - d.h. vom Tastverhältnis des Steuersignals AS1, AS2 bzw. der Schaltelemente S1, S2 beschreibt. Um den Anpassungsschritt 104 rasch durchführen zu können bzw. um die angepasste Stellgröße p1 ohne großen zeitlichen Aufwand und ohne komplexe Berechnungen durchführen zu können, kann entsprechende Entzerrerfunktion der jeweiligen ermittelten Regelmethode in Form einer Tabelle im Entzerrermodul hinterlegt sein.

In einem Ableitungsschritt 105 werden aus der angepassten Stellgröße p1 die jeweiligen Steuersignale AS1, AS2 für die zumindest zwei taktenden Schaltelemente S1, S2 auf der Primärseite des Resonanzwandlers RW abgeleitet. Dabei wird bei der Frequenzmodulation als ermittelte Regelmethode die Frequenz bzw. die Periodendauer des jeweiligen Steuersignals AS1, AS2 in Abhängigkeit von der angepassten Stellgröße p1 verändert. Bei der Tastverhältnismodulation als ermittelte Regelmethode wird hingegen das Tastverhältnis des jeweiligen Steuersignals AS1, AS2 in Abhängigkeit von der angepassten Stellgröße p1 verändert.

In einem Regelungsschritt 106 werden die Schaltelemente S1, S2 auf der Primärseite des Resonanzwandlers RW mit dem durch die angepasste Stellgröße p1 veränderten, jeweiligen Steuersignal AS1, AS2 angesteuert. Bei der Frequenzmodulation als ermittelte Regelmethode takten die Schaltelemente S1, S2 dann je nach der Veränderungen mit einer höheren oder niedrigeren Schaltfrequenz als vor dem Regelungsschritt 106 und beeinflussen damit die Ausgangsspannung Ua bzw. den Ausgangsstrom Ia des Resonanzwandlers RW. Bei der Tastverhältnismodulation als ermittelte Regelmethode werden die Schaltelemente S1, S2 vom jeweiligen Steuersignal AS1, AS2 mit einem geänderten Tastverhältnis angesteuert. Dabei können die Schaltelemente S1, S2 auf der Primärseite des Resonanzwandlers RW beispielsweise länger oder kürzer eingeschaltet werden als vor dem Regelungsschritt 106 und beeinflussen über ihre jeweilige Einschaltdauer die die Ausgangsspannung Ua bzw. den Ausgangsstrom Ia des Resonanzwandlers RW.

Das Verfahren zur Regelung des Resonanzwandlers RW mit seinen Verfahrensschritten 101, 102, 103, 104, 105, 106 wird so lange durchlaufen, bis die Ausgangsspannung Ua bzw. der Ausgangsstrom Ia auf den jeweils vorgegebenen Sollwert Ua,soll bzw. Ia,soll geregelt ist. Wurde der vorgegebenen Sollwert Ua,soll bzw. Ia,soll eingestellt, so wird die Ausgangsspannung Ua bzw. der Ausgangsstrom Ia annähernd auf diesem Wert gehalten. Das bedeutet, die Schaltelemente S1, S2 takten beispielsweise mit jener Schaltfrequenz bzw. jenem Tastverhältnis konstant weiter, mit welchen der Sollwert Ua,soll bzw. Ia,soll erreicht wurde, bis von der Reglereinheit RE wieder eine Abweichung der Ausgangsspannung Ua bzw. des Ausgangsstroms Ia vom Sollwert Ua,soll bzw. Ia,soll festgestellt wird. Dies kann beispielsweise durch Vorgabe eines neuen Sollwerts Ua,soll bzw. Ia,soll für die Ausgangsspannung Ua oder den Ausgangsstrom Ia geschehen und/oder z.B. durch Schwankungen der Eingangsspannung Ue des Resonanzwandlers RW (z.B. Brummspannung, Netzstörung, etc.) bzw. der Ausgangsspannung Ua bzw. des Ausgangsstroms Ia selbst (z.B. Veränderungen der Last des Resonanzwandlers RW).

## Patentansprüche

1. Verfahren zur Regelung eines Resonanzwandlers (RW) mit galvanischer Trennung, insbesondere mit einem Transformator, wobei der Resonanzwandler (RW) primärseitig zumindest zwei taktende Schaltelemente (S1, S2) aufweist, welche jeweils mittels eines Steuersignals (AS1, AS2) angesteuert werden, und wobei das jeweilige Steuersignal (AS1, AS2) zur Ansteuerung der zumindest zwei taktenden Schaltelemente (S1, S2) aus einer Stellgröße (p) einer Reglereinheit (RE) zur Regelung einer Ausgangsspannung (Ua) des Resonanzwandlers (RW) abgeleitet wird, ***dadurch gekennzeichnet*, *dass*** folgende Schritte durchlaufen werden, bis die Ausgangsspannung (Ua) des Resonanzwandlers (RW) auf einem vorgegebenen Sollwert (Ua,soll) annähernd konstant gehalten wird:
- Ermitteln einer jeweils aktuellen Stellgröße (p) mittels Vergleich einer jeweils aktuellen Ausgangsspannung (Ua) mit dem vorgegebenen Sollwert (Ua,soll) (101);
- Zuführen der jeweils aktuellen Stellgröße (p) einem Entzerrermodul (EN) (102);
- Ermitteln einer aktuell anzuwendenden Regelmethode aus zumindest zwei vorgegebenen Regelmethoden durch Vergleich der jeweils aktuellen Stellgröße (p) mit einem vorgegebenen Grenzwert, wobei eine erste Regelmethode angewendet wird, wenn die jeweils aktuelle Stellgröße (p) größer als der vorgegebene Grenzwert ist, und wobei eine zweite Regelmethode angewendet wird, wenn die jeweils aktuelle Stellgröße (p) kleiner als der vorgegebene Grenzwert ist (103);
- Anpassen der jeweils aktuellen Stellgröße (p) an ein Übertragungsverhalten des Resonanzwandlers (RW) als Regelstrecke bei der jeweils ermittelten Regelmethode (104) ;
- Ableiten des jeweiligen Steuersignals (AS1, AS2) für die zumindest zwei taktenden Schaltelemente (S1, S2) aus der jeweils angepassten Stellgröße (p1) entsprechend der jeweils ermittelten Regelmethode (105); und
- Ansteuern der zumindest zwei taktenden Schaltelemente (S1, S2) mit dem jeweiligen abgeleiteten Steuersignal (AS1, AS2) (106).

2. Verfahren nach Anspruch 1, ***dadurch gekennzeichnet, dass*** die jeweils aktuelle Stellgröße (p) im Entzerrermodul (EN) mittels einer Entzerrerfunktion an das Übertragungsverhalten des Resonanzwandlers (RW) als Regelstrecke bei der jeweils ermittelten Regelmethode angepasst wird (104), wobei für die jeweils ermittelte Regelmethode eine entsprechende Entzerrerfunktion verwendet wird.

3. Verfahren nach dem Anspruch 2, ***dadurch gekennzeichnet*, *dass*** als Entzerrerfunktion zum Anpassen der jeweils aktuellen Stellgröße (p) eine Umkehrfunktion einer Übertragungsfunktion des Resonanzwandlers (RW) als Regelstrecke bei der jeweils ermittelten Regelmethode verwendet wird (104).

4. Verfahren nach einem Ansprüche 2 oder 3, ***dadurch gekennzeichnet, dass*** für ein Ableiten der angepassten Stellgröße (p1) im Entzerrermodul (EN) zumindest eine Tabelle hinterlegt wird (104), in welcher die Entzerrerfunktion der jeweils ermittelten Regelmethode abgebildet wird.

5. Verfahren nach einem der vorangegangenen Ansprüche,
***dadurch gekennzeichnet, dass*** als die zumindest zwei Regelmethoden zur Regelung der Ausgangsspannung (Ua) eine Frequenzmodulation und eine Tastverhältnismodulation vorgegeben werden (103).

6. Verfahren nach einem der vorangegangenen Ansprüche,
***dadurch gekennzeichnet, dass*** als Grenzwert für ein Ermitteln der jeweils anzuwendenden Regelmethode ein Stellgrößenwert vorgegeben wird (103), welcher durch eine vorgegebene Grenzfrequenz einer Schaltfrequenz der zumindest zwei taktenden Schaltelemente (S1, S2) festgelegt wird.

7. Verfahren nach Anspruch 6, ***dadurch gekennzeichnet, dass*** als Grenzfrequenz eine Resonanzfrequenz des Resonanzwandlers (RW) vorgegeben wird (103), welche durch eine Resonanzinduktivität (Lr) und eine Resonanzkapazität (Cr) des Resonanzwandlers (RW) festgelegt wird.

8. Verfahren nach einem der vorangegangenen Ansprüche, ***dadurch gekennzeichnet, dass*** von der Reglereinheit (RE) neben der Ausgangsspannung (Ua) des Resonanzwandlers (RW) ein Ausgangsstrom (Ia) des Resonanzwandler (RW) geregelt wird.

9. Verfahren nach einem der vorangegangenen Ansprüche, ***dadurch gekennzeichnet, dass*** das Entzerrermodul (EN) in eine Ansteuerung (AN) zum Ansteuern der zumindest zwei taktenden Schaltelemente (S1, S2) des Resonanzwandlers (RW) integriert wird.

10. Verfahren nach einem der vorangegangenen Ansprüche, ***dadurch gekennzeichnet, dass*** als Resonanzwandler (RW) ein so genannter LLC-Wandler eingesetzt wird.
